# EUROPEAN PATENT SPECIFICATION

(11) **EP 3 842 762 B1**
(45) Date of publication and mention of the grant of the patent: **26.04.2023**
(21) Application number: 21163677.4
(22) Date of filing: 19.03.2021
(51) Int. Cl.: G01C 21/36

(54) **AR NAVIGATION METHOD AND APPARATUS**
ERWEITERTER REALITÄT NAVIGATIONSSYSTEM
SYSTÈME DE NAVIGATION EN RÉALITÉ AUGMENTÉE

(30) Priority: 28.05.2020 CN 202010466019
(43) Date of publication of application: 30.06.2021
(73) Proprietor: Apollo Intelligent Connectivity (Beijing) Technology Co., Ltd., Beijing 100176 (CN)
(72) Inventor: LI, Yinghui, Beijing 100085 (CN)
(74) Representative: Samson & Partner Patentanwälte mbB

(56) References cited:
- EP-A1- 2 374 695
- EP-A1- 3 570 225
- US-A1- 2009 005 961

## Description

### TECHNICAL FIELD

The present application relates to the field of intelligent transportation technologies, and in particular, to an AR navigation method and apparatus.

### BACKGROUND

Augment Reality (AR) navigation, also referred to as real scene navigation, is a method for realizing navigation by combining AR technologies with map information. A navigation device can display real road information on a navigation route through a display screen, so as to provide people with more visual, intuitive and safe navigation services.

In fusion of virtual navigation guidance and a real road scene, it is necessary to generate a guidance route for turning of a vehicle at which the vehicle makes a turning and to integrate the same into the real road scene. In prior art, the guidance route for turning can be generated based on a navigation route. Specifically, multiple shape points on the navigation route can be obtained from a navigation system of the vehicle, and these shape points can be used to fit the guidance route for turning of the vehicle.

However, with existing technologies, there is a large difference between the guidance route for turning determined only according to the navigation route and an actual traveling track of the vehicle, thereby affecting user experience.

EP2374695A1 involves determining (S1) an environment data (30) which describes about multiple turning lanes. A trafficked lane is determined (S2) within a virtual lane progression based on the environment data. The virtual lane progression describes a turning area, and has two virtual lane markings. The virtual lane progression is used for providing (S4) information or assistance to a driver of a vehicle.

US2009005961A1 relates to an en-route navigation system such as for a vehicle, in which an image of a cable is presented as a navigation object in a head-up display to indicate a route that the vehicle should follow. In particular embodiments the cable appears to an observer to be a real cable existing in the landscape and extending higher than the head of the observer as would, for example, a trolley cable. The cable is illustratively displayed volumetrically and with an optic flow that is consistent with the optic flow of the landscape when the vehicle is moving, thereby creating the impression that it is real. As a result, the cable can be displayed without any accompanying images that correlate points on the cable with locations in the landscape and yet nonetheless serve as a very useful tool for indicating to a driver the route over which the vehicle should go. The cable may be in any of a number of forms including a continuous line, a line with non-closely-spaced gaps, a line having non-closely-spaced segments that have a different luminance from the rest of the line or a string of closely-spaced objects.

EP3570225A1 relates to a method for calculating an AR overlay of additional information for a display on an AR display unit. The AR overlay is used for the representation of a navigation route on the AR display unit. The navigation route is specified by a navigation system. The AR overlay is calculated so that a symbol for a target object or a target person is overlaid on the next turn or on the horizon, the symbol being configured so that, besides the information about which target object or which target person is involved, a direction indicator is seen by the driver, in which direction the target object or the target person is to be found.

### SUMMARY

Embodiments of the present application provide an AR navigation method and apparatus, which can ensure that a determined turning guidance track is closer to an actual traveling track of the vehicle, thereby improving user experience. The present invention is defined in the independent claims.

Embodiments of the present application provide the following advantages or beneficial effects: information of a maneuvering point that a vehicle is about to pass through on a navigation route and information of an actual location point of the vehicle is acquired, where the information of the maneuvering point includes a coordinate of the maneuvering point and a navigation direction of the vehicle at the maneuvering point, and the information of the actual location point of the vehicle includes a coordinate of the actual location point and an actual traveling direction of the vehicle at the actual location point. When the vehicle has entered the turning status, the turning guidance track of the vehicle can be determined according to the actual location point of the vehicle, the maneuvering point passed through during the turning, the actual traveling direction and the navigation direction of the vehicle, so as to ensure that the determined turning guidance track is closer to the actual traveling track of the vehicle, and the driver can make an accurate turning according to the turning guidance track, thereby improving the user experience.

Other effects will be explained in the following in combination with specific embodiments.

### BRIEF DESCRIPTION OF DRAWINGS

The drawings are used to better understand solutions, but do not limit the present application. In the drawings:
FIG. 1 is a schematic diagram of an application scenario architecture for the method according to an embodiment of the present application;
FIG. 2 is a schematic flowchart of an AR navigation method according to a first embodiment of the present application;
FIG. 3 is a schematic diagram for determining a turning guidance track;
FIG. 4 is a schematic diagram of an AR navigation display interface;
FIG. 5 is a schematic flowchart of an AR navigation method according to a second embodiment of the present application;
FIG. 6 is a structural diagram of an AR navigation apparatus according to a third embodiment of the present application; and
FIG. 7 is a block diagram of an electronic device for implementing an AR navigation method of an embodiment of the present application.

### DESCRIPTION OF EMBODIMENTS

The following describes exemplary embodiments of the present application in combination with the drawings, in which various details of the embodiments of the present application are included to facilitate understanding, and they shall be considered as merely exemplary. Therefore, those skilled in the art should realize that various changes and modifications can be made to the embodiments described herein without departing from the scope of the present application as defined in the appended claims.

Similarly, for the sake of clarity and conciseness, the description of well-known functions and structures is omitted in the following.

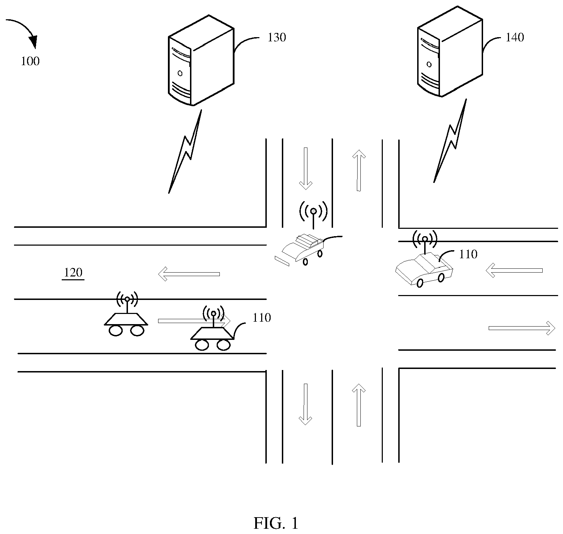

The present application provides an AR navigation method. Illustratively, as shown in FIG. 1, FIG. 1 is a schematic diagram of an application scenario architecture for the method according to an embodiment of the present application.

In an exemplary environment 100 of the application scenario architecture, some typical objects are schematically shown, including a road 120, a vehicle 110 traveling on the road 120, a Global Positioning System (GPS) server 130, and a navigation server 140.

The vehicle 110 may be any type of vehicles that can carry people and/or objects and move via a power system such as an engine, including but not limited to a car, a truck, a bus, an electric vehicle, a motorcycle, a motor home, a train, etc. One or more vehicles 110 in the environment 100 may be a vehicle with a certain capability of autonomous driving, and such vehicles are also referred to as unmanned vehicles. Of course, another one or more vehicles 110 in the environment 100 may also be vehicles without the autonomous driving capability.

Specifically, a navigation terminal in the vehicle 110 is responsible for communication with the GPS server 130 and the navigation server 140, where the navigation terminal can communicate with the GPS server 130 and the navigation server 140 through wireless communication.

The navigation terminal may be a vehicle, or an on-board communication apparatus or an on-board terminal installed on the vehicle for assisting traveling of the vehicle, or a chip in the on-board communication apparatus or the on-board terminal. The on-board terminal can be mobile or fixed.

The navigation terminal may be built, as one or more parts or units, inside an on-board module, an on-board module set, an on-board component, an on-board chip or an on-board unit. The vehicle performs a method of an embodiment of the present application through the built-in on-board module, on-board module set, on-board component, on-board chip or on-board unit.

The navigation terminal can also be an external terminal, such as a mobile phone, a tablet computer and the like, where the external terminal can cooperate with an on-board terminal built in a vehicle to realize navigation and other functions.

The GPS server 130 is configured to provide the navigation terminal with GPS data. According to the GPS data, the navigation terminal locates a geographical position thereof and performs navigation.

The navigation server 140 is configured to plan a navigation route for the navigation terminal. When a user needs to perform navigation, the user inputs a starting place and a destination through the navigation terminal, and the navigation terminal sends a path planning request to the navigation server 140, where the path planning request includes the starting place and the destination. The navigation server 140 plans one or more road routes for the user according to the starting place and destination included in the path planning request, and sends a planned navigation route to the navigation terminal. After receiving the navigation route, the navigation terminal displays the navigation path on an electronic map through a display apparatus.

It should be understood that equipment and objects shown herein are only exemplary, and the objects that may appear in different traffic environments may change according to an actual situation. The scope of embodiments of the present application is not limited in this respect.

Therefore, when the vehicle 110 is an unmanned vehicle, the application scenario architecture further includes a control server (not shown in the figure). During participation of a traffic activity by the vehicle 110, the control server acquires vehicle information required for control and management according to a preset period or in a temporary triggering manner, where the vehicle information includes a vehicle user (a user identifier, etc.), a driving mode (an autonomous driving mode/a semi- autonomous driving mode/a manual driving mode, etc.), a use mode (a private use mode/a rental mode, a dedicated mode/a shared mode, etc.), a right-of-way level (an emergency vehicle/a public vehicle/an ordinary vehicle, etc.), operating status (a position, a direction, a speed, an acceleration, an angular velocity, etc.), operating status (light setting, driver's operations, etc.), status of a component (a control component, a sensor component, a display component, etc.), external perception (information of other traffic participant, information of a traffic environment, etc.) and the like. The information is denoted by vehicle parameter identifiers, and the vehicle 110 actively informs the control server; or, after the control server requests the vehicle 110 and the vehicle 110 responds and feeds back to the control server, the information is stored in association with a temporary identifier of the vehicle 110.

The AR navigation method according to the embodiments of the present application can be performed by a navigation terminal with an AR navigation function. Different from the prior art, in the AR navigation method according to the embodiments of the present application, during a turning of the vehicle, the navigation terminal determines a turning guidance track for the vehicle according to an actual location point of the vehicle, a maneuvering point passed through during the turning, an actual traveling direction and a navigation direction of the vehicle, so as to ensure that the determined turning guidance track is closer to an actual traveling track of the vehicle.

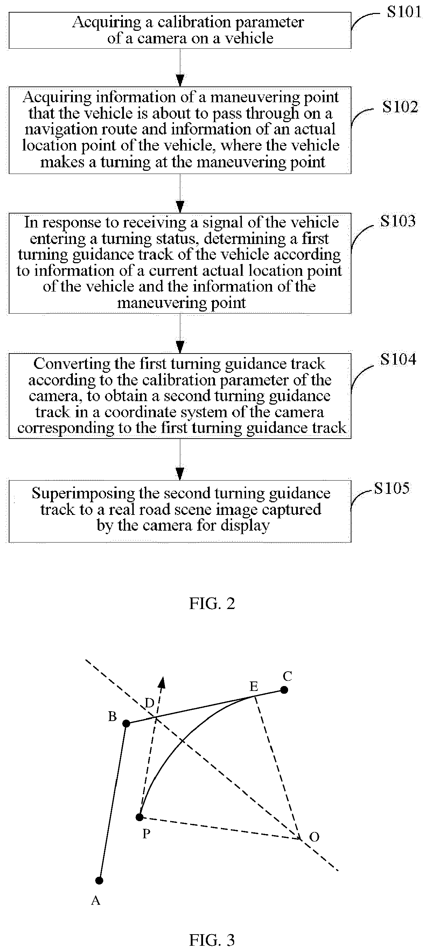

As shown in FIG. 2, FIG. 2 is a schematic flowchart of an AR navigation method according to a first embodiment of the present application. The method can specifically include:
S101: acquiring a calibration parameter of a camera installed on a vehicle.

During the AR navigation, a navigation route displayed on the display apparatus of the navigation terminal is a real road scene image, where the real road scene image is captured in real-time by the camera installed on the vehicle, and is the image of the road where the vehicle is located currently. The real road scene image includes a traffic light, a pedestrian, and buildings along both sides of the road, a plant and the like.

There may be one or more cameras, and the camera can be installed at a fixed position of the vehicle or can be moved. For example, the cameras are installed on both sides of the vehicle's head. The camera can also be replaced by other devices with a photography function, such as a video recorder, a camcorder, etc.

In the process of image measurement and vision application, an image captured by the camera is used to restore an object in a three-dimensional space. Assuming that there is a linear corresponding relationship between the image captured by the camera and the position of an object in the three-dimensional space: [image] = M(object), the process of solving the correspondence relationship M is referred to as camera calibration, where M is the calibration parameter of the camera.

A purpose of the camera calibration is to obtain internal and external parameters and a distortion parameter of the camera or camcorder. Accordingly, the calibration parameter of the camera includes the internal and external parameters and the distortion parameter of the camera.

Optionally, the external parameter of the camera includes three posture angles (a pitch angle, a yaw angle and a roller angle) of the camera and a height of the camera above the ground, etc.

The internal parameter of the camera may include a focal length, a center position of a lens, etc.

Existing calibration methods may be adopted for the camera calibration, including a traditional camcorder calibration method, an active vision camcorder calibration method or a camcorder self-calibration method, and the camcorder calibration method is not limited in the embodiments of the present application.

The process of the camcorder calibration can be performed after the navigation is turned on, so as to obtain the calibration parameter of the camera. The camera can also be calibrated before the navigation starts and stored in the navigation terminal. At this time, the navigation terminal simply needs to read the calibration parameter of the camera.

S102: acquiring information of a maneuvering point that the vehicle is about to pass through on the navigation route and information of an actual location point of the vehicle, where the vehicle makes a turning at the maneuvering point.

The information of the maneuvering point includes a coordinate of the maneuvering point and a navigation direction of the vehicle at the maneuvering point, and the information of the actual location point of the vehicle includes a coordinate of the actual location point and an actual traveling direction of the vehicle at the actual location point.

After the user turns on the navigation function, the navigation terminal receives GPS data from the GPS server, and obtains, according to the GPS data, the coordinate of the actual location point of the vehicle; and the actual traveling direction of the vehicle at the actual location point can be measured by a sensor on the vehicle.

After the user turns on the navigation function, a destination of the navigation is inputted by the user, and a starting place can be located or be inputted by the user. The navigation terminal generates a route planning request according to the starting place and the destination, sends the route planning request to the navigation server, and receives navigation route data returned from the navigation server.

The navigation route data includes information of a series of shape points on the navigation route and the information of the maneuvering point. The shape point is a point reflecting a shape of the route on the navigation route. The maneuvering point includes an intersection, a turning point, an entrance and an exit of an expressway, and a switching point between a main road and an auxiliary road, etc., where the intersection includes a cross-shaped intersection and a T-junction intersection. The navigation route consists of the shape point and the maneuvering point in order.

The information of the shape point includes a coordinate of the shape point, and the information of the maneuvering point includes a coordinate of the maneuvering point, a type of the maneuvering point, a navigation direction of the vehicle at the maneuvering point and a road name. The type of the maneuvering point may be a cross-shaped intersection, a T-junction intersection, an entrance and an exit of an expressway, and a switching point between a main road and an auxiliary road, etc.

In the process of the navigation, the navigation terminal determines a next maneuvering point that the vehicle will pass through according to the actual location point of the vehicle and the navigation route, and determines whether the vehicle makes a turning at the maneuvering point according to the information of the next maneuvering point and the navigation direction at the maneuvering point. If the vehicle makes a turning at the maneuvering point, the following steps of this embodiment will be performed; if the vehicle does not make a turning at the maneuvering point, a normal driving operation will be performed and the navigation terminal will normally display an entity image of the road.

S103: in response to receiving a signal of the vehicle entering a turning status, determining a first turning guidance track of the vehicle according to information of a current actual location point of the vehicle and the information of the maneuvering point.

In this embodiment, the navigation terminal detects whether the vehicle enters the turning status. In an exemplary manner, the user inputs an instruction indicating that the vehicle enters the turning status. After detecting the instruction inputted by the user, the navigation terminal determines, according to the instruction, that the vehicle enters the turning status. For example, the user can input "the vehicle enters a turning" or "turning" in a voice manner. After detecting the voice input, the navigation terminal performs speech recognition, and determines, according to a result of the speech recognition, that the vehicle enters the turning status.

In another exemplary manner, the navigation terminal determines, according to a change of the traveling parameter of the vehicle, whether the vehicle enters the turning status. For example, determining whether the vehicle enters the turning status according to the actual traveling direction of the vehicle, the navigation direction of the vehicle, and a change between the actual location point and a positioning point corresponding to the actual location point of the vehicle. When the vehicle enters the turning status, the signal of the vehicle entering the turning status is generated.

The positioning point in the embodiments of the present application refers to a displayed point corresponding to the actual location point of the vehicle on the navigation route, i.e., a mapping point of the actual location point of the vehicle displayed on an electronic map.

The information of the maneuvering point includes the coordinate of the maneuvering point and the navigation direction of the vehicle at the maneuvering point. The information of the actual location point of the vehicle includes the coordinate of the actual location point and the actual traveling direction of the vehicle at the actual location point. The navigation terminal determines the first turning guidance track of the vehicle according to the coordinate of the actual location point of the vehicle, the actual traveling direction of the vehicle, the coordinate of the maneuvering point and the navigation direction.

As an example, the first turning guidance track is determined according to the method shown in FIG. 3. Take a current actual location point P as an endpoint, and a ray is made along the actual traveling direction of the vehicle at the point P, the ray intersects with a line segment BC at a point D, where the line segment BC is formed by a maneuvering point B and a shape point C located behind the maneuvering point B on the navigation route, and a shape point A in FIG. 3 is located ahead of the maneuvering point B on the navigation route. An angle bisector is made for PDC, a vertical line for PD is made through the point P, and the vertical line for PD intersects with the angle bisector for the PDC at a point O. An arc PE is made with the point O as a circle center and OP as a radius, where the arc PE is tangent to the line segment BC at a point E. A curve EC between the point C and the point E is obtained using a curve fitting method. The arc PE and the curve EC are connected to form the first turning guidance track PEC.

Optionally, the curve EC can be obtained by using a Bessel curve fitting method. The first turning guidance track PEC can be in the form of an arc, a parabola, a hyperbola, etc., which is not limited in this embodiment.

S104: converting the first turning guidance track according to the calibration parameter of the camera, to obtain a second turning guidance track in a coordinate system of the camera corresponding to the first turning guidance track.

Image processing relates to two coordinate systems: a camcorder coordinate system (a coordinate system of the camera) and a world coordinate system (world coordinate). The world coordinate system, also referred to as a measurement coordinate system, is a three-dimensional rectangular coordinate system, which can be used as a reference to describe a spatial position of the camcorder and a spatial position of the object to be measured. The position of the world coordinate system can be freely determined according to an actual situation. The camcorder coordinate system is also a three-dimensional rectangular coordinate system, where the origin is located at the center position of a lens, the x-axis and the y-axis are respectively parallel to both sides of a phase plane, the z-axis is an optical axis of the lens and is perpendicular to an image plane. The world coordinate system and the three-dimensional coordinate system can be converted between each other.

The first turning guidance track is a moving track in the world coordinate system, while the turning guidance track in a real road scene image finally displayed on the display apparatus of the navigation terminal is a moving track in the coordinate system of the camera. Therefore, it is necessary to convert the first turning guidance track from the world coordinate system to the coordinate system of the camera, to obtain the second turning guidance track. For specific conversion methods, reference may be made to existing technologies, which will not be repeated here.

S 105: superimposing the second turning guidance track to a real road scene image captured by the camera for display.

The second turning guidance track is configured to represent a turning direction and a turning radius for the vehicle. Step S105 is an optional step. For example, in an autonomous vehicle, the second turning guidance track may not be displayed, and the vehicle controls a turning of the vehicle according to the second turning guidance track.

The turning guidance track obtained by the above methods conforms to the current actual traveling track of the vehicle, and for different maneuvering points, adjusted turning guidance tracks fitting thereto can be obtained. When a user makes a turning according to the turning guidance track, an accurate turning is made and user experience is improved.

In the process of the AR navigation, an image displayed on the display apparatus of the navigation terminal is a real road scene image, which is captured in real-time by the camera on the vehicle. The navigation apparatus needs to superimpose or fuse the real road scene image captured by the camera with AR data, where the AR data includes the second turning guidance track, and the AR data further includes: a name of a road where the vehicle is currently located, a remaining distance to reach the destination, remaining time to reach the destination, etc.

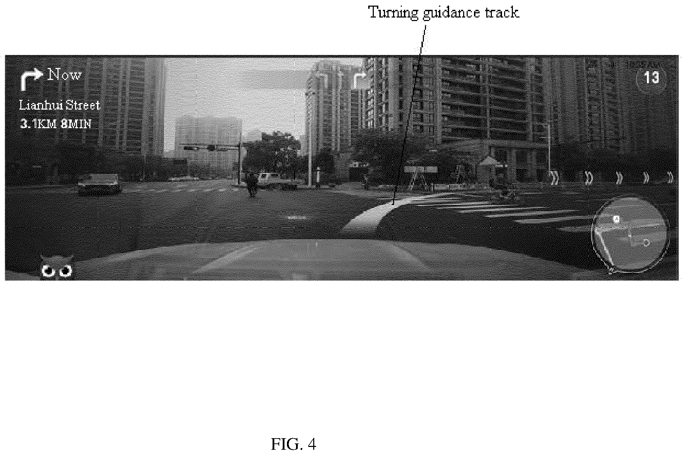

FIG. 4 is a schematic diagram of an AR navigation display interface. As shown in FIG. 4, the turning guidance track is superimposed to the road real scene image for display, where the turning guidance track can not only be used to represent the turning direction of the vehicle, but also the turning radius for the vehicle. When a driver makes a turning according to the turning guidance track, an accurate turning is made and user experience is improved. However, in the prior art, the turning guidance track can only represent the turning direction, but cannot represent the turning radius for the vehicle, if the driver makes a turning according to the turning guidance track, the turning may be too large or too small, resulting in a failed turning, or affecting normal traveling of other vehicles.

In the AR navigation display interface shown in FIG. 4, the current status displaying a vehicle is superimposed to the real road scene image previously. The upper left arrow shown in FIG. 4 indicates that the vehicle is in a turning status, and the name of the road where the vehicle is currently located, the remaining distance of 3.1 km to reach the destination, and the remaining time of 8 minutes to reach the destination are shown in the upper left portion of the display interface; a circular map thumbnail, for displaying the navigation route and the positioning point of the vehicle, is shown in the lower right corner of the display interface.

In this embodiment, the calibration parameter of the camera installed on the vehicle is acquired, and the information of the maneuvering point that the vehicle is about to pass through on the navigation route and the information of the actual location point of the vehicle are obtained, where the vehicle makes a turning at the maneuvering point. When the vehicle has entered the turning status, a first turning guidance track of the vehicle is determined according to the information of the current actual location point and the information of the maneuvering point. The first turning guidance track is converted according to the calibration parameter of the camera, to obtain a second turning guidance track in the coordinate system of the camera corresponding to the first turning guidance track, and then the second turning guidance track is superimposed to the real road scene image captured by the camera for display, where the second turning guidance track is configured to denote the turning direction and the turning radius for the vehicle. The turning guidance track of the vehicle can be determined according to the actual location point of the vehicle, the maneuvering point passed through during the turning, the actual traveling direction and the navigation direction of the vehicle, so as to ensure that the determined turning guidance track is closer to the actual traveling track of the vehicle, and the driver can make an accurate turning according to the turning guidance track, thereby improving the user experience.

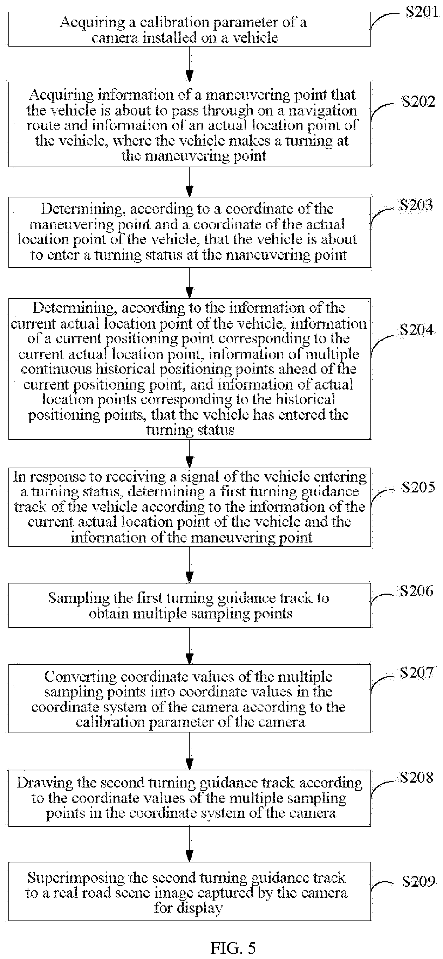

On the basis of the first embodiment, FIG. 5 is a schematic flowchart of an AR navigation method according to a second embodiment of the present application. As shown in FIG. 5, the method can specifically include:
S201: acquiring a calibration parameter of a camera installed on a vehicle; and
S202: acquiring information of a maneuvering point that the vehicle is about to pass through on a navigation route and information of an actual location point of the vehicle, where the vehicle makes a turning at the maneuvering point.

For specific implementations of steps S201 and S202, reference may be made to the description related to steps S101 and S 102 in the first embodiment, which will not be repeated here.

S203: determining, according to a coordinate of the maneuvering point and a coordinate of the actual location point of the vehicle, that the vehicle is about to enter a turning status at the maneuvering point.

Illustratively, an actual distance between the vehicle and the maneuvering point is determined according to the coordinate of the maneuvering point and the coordinate of the actual location point of the vehicle. It is judged that whether the actual distance between the vehicle and the maneuvering point is smaller than a preset distance threshold. When the actual distance between the vehicle and the maneuvering point is smaller than the preset distance threshold, it is determined that the vehicle is about to enter the turning status. When the actual distance between the vehicle and the maneuvering point is greater than or equal to the preset distance threshold, it is determined that the vehicle does not enter the turning status.

The distance threshold can be 60m, 70m, 80m, etc., which is not limited in this embodiment. Taking the distance threshold of 80m as an example, the navigation terminal starts to judge whether the actual distance between the vehicle and the maneuvering point is smaller than 80m after passing through a previous maneuvering point ahead of the maneuvering point. When the actual distance between the vehicle and the maneuvering point is smaller than 80m, it is determined that the vehicle is about to enter the turning status. It can be understood that the vehicle being about to enter the turning status refers to that the vehicle will enter the turning status immediately or enter the turning status after a very short period of time.

S204: determining that the vehicle has entered the turning status according to information of a current actual location point of the vehicle, information of a current positioning point corresponding to the current actual location point, information of multiple continuous historical positioning points ahead of the current positioning point and information of actual location points corresponding to the historical positioning points.

A positioning point is a point corresponding to the actual location point of the vehicle on the navigation route. Each actual location point of the vehicle corresponds to a unique positioning point on the navigation route. The information of the positioning point includes the coordinate of the positioning point and the navigation direction of the vehicle at the positioning point. The information of the actual location point includes the coordinate of the actual location point and the actual traveling direction of the vehicle at the actual location point. The coordinate of the vehicle at the actual location point is different from the coordinate of the positioning point corresponding to the actual location point, and the actual traveling direction of the vehicle at the actual location point is different from the navigation direction of the vehicle at the positioning point corresponding to the actual location point.

Illustratively, distances between each of the historical positioning points and the actual location point corresponding to each of the historical positioning points are determined according to coordinates of the multiple continuous historical positioning points and coordinates of the actual location points corresponding to the historical positioning points; and an included angle between the actual traveling direction of the vehicle at the current actual location point and the navigation direction of the vehicle at the positioning point corresponding to the current actual location point is determined. When the distances between each of the historical positioning points and the actual location point corresponding to each of the historical positioning points increase continuously and the included angle is greater than a preset angle, it is determined that the vehicle has entered the turning status.

When the vehicle drives in a straight line, the distance between the positioning point and the actual location point may be fixed or fluctuated within a small range, that is, the distance between the positioning point and the actual location point may increase for a moment, decrease for a moment and remain unchanged for a moment, while time for increase or decrease is very short. However, after the vehicle makes a turning, the distance between the positioning point and the actual location point will increase continuously. Therefore, whether the vehicle has entered the turning status can be determined according to this feature.

In addition, when the vehicle drives in a straight line, the included angle between the navigation direction and the actual traveling direction of the vehicle is usually very small or zero. However, during a turning, the navigation direction of the vehicle changes very small, while the actual traveling direction of the vehicle changes greatly, thereby resulting in the increase of the included angle formed therebetween. Therefore, the angle between the actual traveling direction and the navigation direction of the vehicle can be used to determine whether the vehicle enters the turning status. If the included angle is greater than a preset angle, it is determined that the vehicle has entered the turning status. The preset angle can be, for example, 10 degrees, 8 degrees, 9 degrees, 11 degrees, etc.

In this embodiment, it is first determined that the vehicle is about to enter the turning status. On the basis of determining that the vehicle is about to enter the turning status, whether the vehicle has entered the turning status is further determined, so as to ensure that the turning guidance track is determined immediately after the vehicle enters the turning status, thereby ensuring that the determined turning guidance path is timely and accurate. If a turning guidance route is determined too early (the vehicle has not entered the turning status yet) according to the information of the current actual location point of the vehicle and the information of the maneuvering point, since the information of the current actual location point is not accurate, the determined turning guidance route will greatly deviate from the actual driving route of the vehicle. If the turning guidance route is determined too late (i.e. the vehicle has entered the turning status for a period of time) according to the information of the current actual location point of the vehicle and the information of the maneuvering point, since the vehicle has started to make a turning, and the determined turning guidance route appears with delay, which cannot well guide the user to make a turning.

In addition, in this embodiment, whether the vehicle has entered the turning status can be determined according to the actual status of the vehicle, i.e., according to the actual position and the actual traveling direction of the vehicle, thus ensuring that the finally determined status is accurate.

S205: in response to receiving a signal of the vehicle entering a turning status, determining a first turning guidance track of the vehicle according to the information of the current actual location point of the vehicle and the information of the maneuvering point.

For specific implementations of step S205, reference may be made to the description related to step S103 in the first embodiment, which will not be repeated here.

S206: sampling the first turning guidance track to obtain multiple sampling points.

S207: converting coordinate values of the multiple sampling points into coordinate values in the coordinate system of the camera according to the calibration parameter of the camera.

S208: drawing the second turning guidance track according to the coordinate values of the multiple sampling points in the coordinate system of the camera.

In this embodiment, the first turning guidance track is converted from the world coordinate system to the coordinate system of the camera through steps S206 to S208. Selecting an appropriate number of sampling points can reduce the amount of calculation in the process of coordinate conversion, thus saving conversion time, and ensuring that the converted second turning guidance track will not be biased.

S209: superimposing the second turning guidance track to a real road scene image captured by the camera for display.

The second turning guidance track is configured to denote the turning direction and the turning radius of the vehicle.

In this embodiment, it is determined, according to the coordinate of the maneuvering point and the coordinate of the actual location point of the vehicle, that the vehicle is about to enter the turning status at the maneuvering point; and it is determined, according to the information of the current actual location point of the vehicle, the information of the current positioning point corresponding to the current actual location point, the information of the multiple continuous historical positioning points ahead of the current positioning point, and the information of the actual location points corresponding to the historical positioning points, that the vehicle has entered the turning status, where the positioning point is a point corresponding to the actual location point of the vehicle on the navigation route. According to the actual status of the vehicle, i.e., according to the actual location and the actual traveling direction of the vehicle, whether the vehicle has entered the turning status can be determined accurately, and the turning guidance track for the vehicle can be determined immediately after the vehicle enters the turning status, so that the turning guidance track is closer to the current traveling direction of the vehicle, thereby improving the user experience.

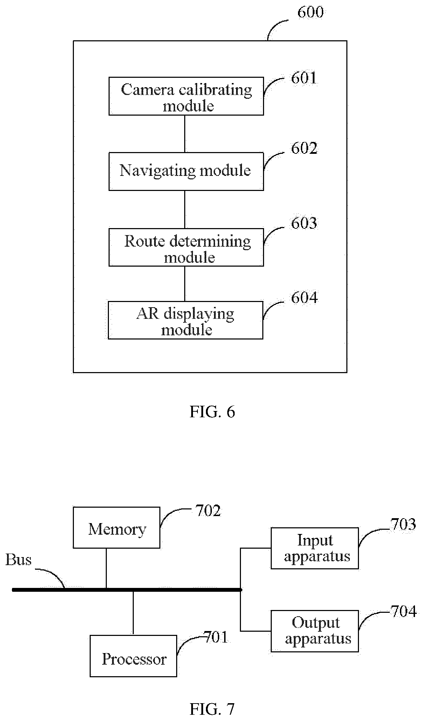

FIG. 6 is a structural diagram of an AR navigation apparatus according to a third embodiment of the present application, as shown in FIG. 6. The AR navigation apparatus 600 of this embodiment includes:
a camera calibrating module 601, configured to acquire a calibration parameter of a camera installed on a vehicle;
a navigating module 602, configured to acquire information of a maneuvering point that the vehicle is about to pass through on the navigation route and information of an actual location point of the vehicle, where the vehicle makes a turning at the maneuvering point, the information of the maneuvering point includes a coordinate of the maneuvering point and a navigation direction of the vehicle at the maneuvering point, and the information of the actual location point of the vehicle includes a coordinate of the actual location point and an actual traveling direction of the vehicle at the actual location point;
a route determining module 603, configured to determine, in response to receiving a signal of the vehicle entering a turning status, a first turning guidance track of the vehicle according to information of a current actual location point of the vehicle and the information of the maneuvering point; and
an AR displaying module 604, configured to convert the first turning guidance track according to the calibration parameter of the camera, to obtain a second turning guidance track in a coordinate system of the camera corresponding to the first turning guidance track.

In a possible implementation, the AR displaying module 604 is further configured to superimpose the second turning guidance track to a real road scene image captured by the camera for display.

In one possible implementation, the route determining module 603 is specifically configured to:
take the current actual location point P as an endpoint to make a ray along the actual traveling direction of the vehicle at the point P, where the ray intersects with a line segment BC at a point D, the line segment BC is formed by the maneuvering point B and a shape point C located behind the maneuvering point B on the navigation route;
make an angle bisector for an angle PDC, and make a vertical line for PD through the point P, the vertical line for PD intersecting with the angle bisector for the angle PDC at a point O; and make an arc with the point O as a circle center and OP as a radius, the arc being tangent to the line segment BC at a point E;
obtain a curve between the point C and the point E by using a curve fitting method; and
connect the arc and the curve to form the first turning guidance track.

In one possible implementation, the AR displaying module 604 is specifically configured to:
sample the first turning guidance track to obtain multiple sampling points;
convert coordinate values of the multiple sampling points to coordinate values in the coordinate system of the camera according to the calibration parameter of the camera; and
draw the second turning guidance track according to the coordinate values of the multiple sampling points in the coordinate system of the camera.

In a possible implementation, the route determining module 603 is further configured to:
determine, according to the coordinate of the maneuvering point and the coordinate of the actual location point of the vehicle, that the vehicle is about to enter the turning status at the maneuvering point; and
determine, according to the information of the current actual location point of the vehicle, information of a current positioning point corresponding to the current actual location point, the information of the multiple continuous historical positioning points, and information of actual location points corresponding to the historical positioning points, that the vehicle has entered the turning status, where the positioning point is a point corresponding to the actual location point of the vehicle on the navigation route.

In a possible implementation, the determining, by the route determining module 603, according to the coordinate of the maneuvering point and the coordinate of the actual location point of the vehicle, that the vehicle is about to enter the turning status at the maneuvering point, includes:
determining an actual distance between the vehicle and the maneuvering point according to the coordinate of the maneuvering point and the coordinate of the actual location point of the vehicle; and
determining that the vehicle is about to enter the turning status under a condition that the actual distance between the vehicle and the maneuvering point is smaller than a preset distance threshold.

In a possible implementation mode, the determining, by the route determining module 603, according to the information of the current actual location point of the vehicle, the information of the current positioning point corresponding to the current actual location point, the information of the multiple continuous historical positioning points, and the information of the actual location points corresponding to the historical positioning points, that the vehicle has entered the turning status, includes:
determining, according to the coordinates of the multiple continuous historical positioning points and coordinates of the actual location point corresponding to the historical positioning points, distances between each of the historical positioning points and the actual location point corresponding to each of the historical positioning points;
determining an included angle between an actual traveling direction of the vehicle at the current actual location point and a navigation direction of the vehicle at the current positioning point corresponding to the current actual location point; and
determining that the vehicle has entered the turning status under a condition that the distances between each of the historical positioning points and the actual location point corresponding to each of the historical positioning points increase continuously, and the included angle is greater than the preset angle.

According to the AR navigation apparatus provided by this embodiment, information of a maneuvering point that a vehicle is about to pass through on a navigation route and information of an actual location point of the vehicle is acquired, where the information of the maneuvering point includes a coordinate of the maneuvering point and a navigation direction of the vehicle at the maneuvering point, and the information of the actual location point of the vehicle includes a coordinate of the actual location point and an actual traveling direction of the vehicle at the actual location point. In response to receiving a signal of the vehicle entering the turning status, the turning guidance track of the vehicle can be determined according to the actual location point of the vehicle, the maneuvering point passed through during the turning, the actual traveling direction and the navigation direction of the vehicle, so as to ensure that the determined turning guidance track is closer to the actual traveling track of the vehicle, and the driver can make an accurate turning according to the turning guidance track, thereby improving the user experience.

According to an embodiment of the present application, a non-transitory computer-readable storage medium storing computer instructions is further provided, wherein the computer instructions are configured to cause a computer to perform the AR navigation method according to the present application.

According to an embodiment of the present application, the present application further provides a computer program product containing instructions, where the instructions are stored in a readable storage medium, at least one processor of an electronic device can read the instructions from the readable storage medium, and the at least one processor executes the instructions to enable the electronic device to perform the AR navigation method according to the present application.

As shown in FIG. 7, which is a block diagram of an electronic device for an AR navigation method according to an embodiment of the present application, the electronic device is intended to represent various forms of digital computers, such as a laptop computer, a desktop computer, a workstation, a personal digital assistant, a server, a blade server, a mainframe computer, and other suitable computers. The electronic device may also represent various forms of mobile devices, such as a personal digital processing, a cellular phone, a smart phone, a wearable device, and other similar computing devices. Components shown herein, connections and relationships thereof, as well as functions thereof are merely examples and are not intended to limit the present application implementation described and/or claimed herein.

As shown in FIG. 7, the electronic device includes: one or more processors 701, memory 702, and interfaces for connecting various components, including a high-speed interface and a low-speed interface. The various components are interconnected through different buses and can be installed on a common motherboard or be installed in other ways as required. The processor may process instructions executed within the electronic device, where the instructions include instructions stored in or on a memory to display graphical information of the GUI on an external input/output apparatus (such as, a display device coupled to an interface). In other embodiments, a plurality of processors and/or a plurality of buses may be used with a plurality of memories and a plurality of memories, if required. Similarly, a plurality of electronic devices can be connected, each of which provides some of the necessary operations (for example, functions as a server array, a set of blade servers, or a multiprocessor system). In FIG. 7, one processor 701 is taken as an example.

The memory 702 is a non-transitory computer-readable storage medium according to the present application. The memory stores instructions executable by at least one processor to cause the at least one processor to perform the AR navigation method according to the present application. The non-transitory computer-readable storage medium of the present application stores computer instructions, where computer instructions cause a computer to perform the AR navigation method according to the present application.

The memory 702, as a non-transitory computer-readable storage medium, can be configured to store a non-transitory software program, a non-transitory computer executable program and module, such as a program instruction/module (e.g., the camera calibrating module 601, the navigating module 602, the route determining module 603 and the AR displaying module 604, shown in FIG. 6) corresponding to the AR navigation method in the embodiment of the present application. By running the non-transitory software program, instructions and modules stored in the memory 702, the processor 701 performs various functional applications and data processing of the server, that is, realizes the AR navigation method in the above method embodiments.

The memory 702 may include a program storing area and a data storing area, where the program storing area may store an operating system and application programs required by at least one function; and the data storing area may store data created according to the use of the electronic device for the AR navigation method and the like. In addition, the memory 702 may include a high-speed random access memory, and may also include a non-transitory memory, such as at least one magnetic disk storage device, a flash memory device, or other non-transitory solid-state memory devices. In some embodiments, the memory 702 may optionally include memories provided remotely with respect to the processor 701, and these remote memories may be connected via a network to an electronic device for the AR navigation method. Examples of the above-mentioned network may include, but are not limited to, the Internet, an intranet, a local area network, a mobile communication network and a combination thereof.

The electronic device for the AR navigation method may further include: an input apparatus 703 and an output apparatus 704. The processor 701, the memory 702, the input apparatus 703 and the output apparatus 704 may be connected via a bus or other means, and an example of a connection via the bus is shown in FIG. 7.

The input apparatus 703 may receive input digital or personal information, and generate key signal input related to a user setting and functional control of the electronic device. The input apparatus, for example, is a touch screen, a keypad, a mouse, a trackpad, a touchpad, a pointer, one or more mouse buttons, a trackball, a joystick and other input apparatuses. The output apparatus 704 may include: a display device, an auxiliary lighting device (e.g., a light emitting diode (LED)), a tactile feedback device (e.g., a vibration motor) and the like. The display device may include, but is not limited to, a liquid crystal display (LCD), an LED display and a plasma display. In some embodiments, the display device may be a touch screen.

Various embodiments of the systems and technologies described herein may be implemented in a digital electronic circuit system, an integrated circuit system, a specialized ASIC (application specific integrated circuits), computer hardware, firmware, software, and/or a combination thereof. These various embodiments may include: being implemented in one or more computer programs, where the one or more computer programs may be executed and/or interpreted on a programmable system including at least one programmable processor, where the programmable processor may be a specialized or general-purpose programmable processor, which may receive data and instructions from a storage system, at least one input apparatus and at least one output apparatus and send the data and instructions to the storage system, the at least one input apparatus and the at least one output apparatus.

These computer programs (also referred to as programs, software, software applications, or codes) include machine instructions for programmable processors and can be implemented by using a high-level procedure and/or object-oriented programming language, and/or an assembly/machine language. As used herein, the terms "machine-readable medium" and "computer-readable medium" refer to any computer program product, apparatus, and/or device (e.g., a magnetic disk, an optical disk, a memory, a programmable logic device (PLD)) for providing a machine instruction and/or data to the programmable processor, and include a machine-readable medium that receives a machine instruction as a machine-readable signal. The term "machine-readable signal" refers to any signal used to provide a machine instruction and/or data to the programmable processor.

In order to provide interaction with a user, the systems and techniques described herein may be implemented on a computer, where the computer has: a display apparatus (e.g., a CRT (cathode ray tube) or an LCD (liquid crystal display) monitor) for displaying information to the user; and a keyboard and a pointing device (e.g., a mouse or a trackball), through which the user can provide input to a computer. Other types of devices may also be used to provide interaction with the user; for example, the feedback provided to the user may be any form of sensing feedback (such as, visual feedback, auditory feedback, or tactile feedback); and the input from the user may be received in any form (including acoustic input, voice input, or tactile input).

The systems and technologies described here may be implemented in a computing system (e.g., a data server) including a back-end component, or in a computing system (e.g., an application server) including a middleware component, or in a computing system (e.g., a user computer having a graphical user interface or a web browser, through which the user can interact with the implementation of the systems and technologies described herein) including a front-end component, or in a computing system including any combination of the background component, the middleware component, or the front-end component. The components of the system may be interconnected via digital data communication (e.g., a communication network) in any form or medium. Examples of the communication network include: a local area network (LAN), a wide area network (WAN) and Internet.

The computing system may include a client and a server. The client and the server are generally located far away from each other and usually interact with each other through a communication network. A relationship between the client and the server is generated by computer programs running on corresponding computers and having a client-server relationship between each other.

It should be understood that steps can be reordered, added, or deleted, within the scope defined by the appended claims, by using the various forms of processes shown above. For example, the steps recited in the present application can be performed in parallel, in sequence or in different orders, as long as expected results of the technical solution disclosed by the present application can be realized, and there is no limitation herein.

The above specific implementations do not limit the protection scope of the present application. It should be understood by those skilled in the art that various modifications, combinations, sub-combinations and substitutions may be made, within the scope defined by the appended claims, according to design requirements and other factors.

## Claims

1. An Augment Reality, AR, navigation method, comprising:
acquiring (S101) a calibration parameter of a camera on a vehicle;
acquiring (S102) information of a maneuvering point that the vehicle is about to pass through on a navigation route and information of an actual location point of the vehicle, wherein the vehicle makes a turning at the maneuvering point, the information of the maneuvering point comprises a coordinate of the maneuvering point and a navigation direction of the vehicle at the maneuvering point, and the information of the actual location point of the vehicle comprises a coordinate of the actual location point and an actual traveling direction of the vehicle at the actual location point, wherein the coordinate of the actual location point is obtained according to GPS data sent from a GPS server, and the actual traveling direction of the vehicle at the actual location point is measured by a sensor on the vehicle;
in response to receiving a signal of the vehicle entering a turning status, determining (S 103) a first turning guidance track of the vehicle according to information of a current actual location point of the vehicle and the information of the maneuvering point, wherein the first turning guidance track represents a turning direction of the vehicle and a turning radius for the vehicle; and
converting (S 104) the first turning guidance track according to the calibration parameter of the camera, to obtain a second turning guidance track in a coordinate system of the camera corresponding to the first turning guidance track;
wherein the determining (S 103) the first turning guidance track of the vehicle according to the information of the current actual location point of the vehicle and the information of the maneuvering point comprises:
taking the current actual location point P as an endpoint to make a ray along the actual traveling direction of the vehicle at the point P, wherein the ray intersects with a line segment BC at a point D, the line segment BC is formed by the maneuvering point B and a shape point C located behind the maneuvering point B on the navigation route;
making an angle bisector for an angle PDC, and making a vertical line for PD through the point P, wherein the vertical line for PD intersects with the angle bisector for the angle PDC at a point O; and making an arc with the point O as a circle center and OP as a radius, wherein the arc is tangent to the line segment BC at a point E;
obtaining a curve between the point C and the point E by using a curve fitting method; and
connecting the arc and the curve to form the first turning guidance track.

2. The AR navigation method according to claim 1, further comprising:
superimposing (S 105) the second turning guidance track to a real road scene image captured by the camera for display.

3. The AR navigation method according to claim 1, wherein the converting (S 104) the first turning guidance track according to the calibration parameter of the camera, to obtain the second turning guidance track in the coordinate system of the camera corresponding to the first turning guidance track comprises:
sampling (S206) the first turning guidance track to obtain multiple sampling points;
converting (S207) coordinate values of the multiple sampling points to coordinate values in the coordinate system of the camera according to the calibration parameter of the camera; and
drawing (S208) the second turning guidance track according to the coordinate values of the multiple sampling points in the coordinate system of the camera.

4. The AR navigation method according to any one of claims 1-3, further comprising:
determining (S203), according to the coordinate of the maneuvering point and the coordinate of the actual location point of the vehicle, that the vehicle is about to enter the turning status at the maneuvering point; and
determining (S204), according to the information of the current actual location point of the vehicle, information of a current positioning point corresponding to the current actual location point, information of multiple continuous historical positioning points, and information of actual location points corresponding to the historical positioning points, that the vehicle has entered the turning status, wherein the positioning point is a point corresponding to the actual location point of the vehicle on the navigation route.

5. The AR navigation method according to claim 4, wherein the determining (S203), according to the coordinate of the maneuvering point and the coordinate of the actual location point of the vehicle, that the vehicle is about to enter the turning status at the maneuvering point comprises:
determining an actual distance between the vehicle and the maneuvering point according to the coordinate of the maneuvering point and the coordinate of the actual location point of the vehicle; and
determining that the vehicle is about to enter the turning status under a condition that the actual distance between the vehicle and the maneuvering point is smaller than a preset distance threshold.

6. The AR navigation method according to claim 4, wherein the determining (S204), according to the information of the current actual location point of the vehicle, the information of the current positioning point corresponding to the current actual location point, the information of the multiple continuous historical positioning points, and the information of the actual location points corresponding to the historical positioning points, that the vehicle has entered the turning status comprises:
determining, according to coordinates of the multiple continuous historical positioning points and coordinates of the actual location points corresponding to the historical positioning points, distances between each of the historical positioning points and the actual location point corresponding to each of the historical positioning points;
determining an included angle between an actual traveling direction of the vehicle at the current actual location point and a navigation direction of the vehicle at the current positioning point corresponding to the current actual location point; and
determining that the vehicle has entered the turning status under a condition that the distances between each of the historical positioning points and the actual location point corresponding to each of the historical positioning points increase continuously, and the included angle is greater than a preset angle.

7. An Augment Reality, AR, navigation apparatus (600), comprising:
a camera calibrating module (601), configured to acquire a calibration parameter of a camera installed on a vehicle;
a navigating module (602), configured to acquire (S102) information of a maneuvering point that the vehicle is about to pass through on the navigation route and information of an actual location point of the vehicle, wherein the vehicle makes a turning at the maneuvering point, the information of the maneuvering point comprises a coordinate of the maneuvering point and a navigation direction of the vehicle at the maneuvering point, and the information of the actual location point of the vehicle comprises a coordinate of the actual location point and an actual traveling direction of the vehicle at the actual location point, wherein the coordinate of the actual location point is obtained according to GPS data sent from a GPS server, and the actual traveling direction of the vehicle at the actual location point is measured by a sensor on the vehicle;
a route determining module (603), configured to detemine (S103), in response to receiving a signal of the vehicle entering a turning status, a first turning guidance track of the vehicle according to information of a current actual location point of the vehicle and the information of the maneuvering point, wherein the first turning guidance track represents a turning direction of the vehicle and a turning radius for the vehicle; and
an AR displaying module (604), configured to convert (S104) the first turning guidance track according to the calibration parameter of the camera, to obtain a second turning guidance track in a coordinate system of the camera corresponding to the first turning guidance track;
wherein the route determining module (603) is specifically configured to:
take the current actual location point P as an endpoint to make a ray along the actual traveling direction of the vehicle at the point P, wherein the ray intersects with a line segment BC at a point D, the line segment BC is formed by the maneuvering point B and a shape point C located behind the maneuvering point B on the navigation route;
make an angle bisector for an angle PDC, and make a vertical line for PD through the point P, wherein the vertical line for PD intersects with the angle bisector for the angle PDC at a point O; and make an arc with the point O as a circle center and OP as a radius, wherein the arc is tangent to the line segment BC at a point E;
obtain a curve between the point C and the point E by using a curve fitting method; and
connect the arc and the curve to form the first turning guidance track.

8. The AR navigation apparatus (600) according to claim 7, wherein,
the AR displaying module (604) is further configured to superimpose the second turning guidance track to a real road scene image captured by the camera for display.

9. The AR navigation apparatus (600) according to claim 7, wherein the AR displaying module (604) is specifically configured to:
sample the first turning guidance track to obtain multiple sampling points;
convert coordinate values of the multiple sampling points to coordinate values in the coordinate system of the camera according to the calibration parameter of the camera; and
draw the second turning guidance track according to the coordinate values of the multiple sampling points in the coordinate system of the camera.

10. The AR navigation apparatus (600) according to any one of claims 7-9, wherein the route determining module (603) is further configured to:
determine (S203), according to the coordinate of the maneuvering point and the coordinate of the actual location point of the vehicle, that the vehicle is about to enter the turning status at the maneuvering point; and
determine (S204), according to the information of the current actual location point of the vehicle, information of a current positioning point corresponding to the current actual location point, information of multiple continuous historical positioning points, and information of actual location points corresponding to the historical positioning points, that the vehicle has entered the turning status, wherein the positioning point is a point corresponding to the actual location point of the vehicle on the navigation route.

11. A non-transitory computer-readable storage medium storing computer instructions, wherein the computer instructions are configured to cause a computer to perform the method according to any one of claims 1-6.

12. A computer program product, comprising instructions, which when running on an electronic device, cause the electronic device to perform the method according to any one of claims 1-6.

## Patentansprüche

1. Augmented-Reality, AR, -Navigationsverfahren, umfassend:
Erfassen (S101) eines Kalibrierungsparameters einer Kamera an einem Fahrzeug;
Erfassen (SI02) von Informationen eines Manövrierpunktes, den das Fahrzeug auf einer Navigationsroute passieren wird, und von Informationen eines tatsächlichen Ortspunktes des Fahrzeugs, wobei das Fahrzeug an dem Manövrierpunkt abbiegt, wobei die Informationen des Manövrierpunktes eine Koordinate des Manövrierpunktes und eine Navigationsrichtung des Fahrzeugs an dem Manövrierpunkt umfassen, und wobei die Informationen des tatsächlichen Ortspunktes des Fahrzeugs eine Koordinate des tatsächlichen Ortspunktes und eine tatsächliche Fahrtrichtung des Fahrzeugs an dem tatsächlichen Ortspunkt umfassen, wobei die Koordinate des tatsächlichen Ortspunktes gemäß GPS-Daten erhalten wird, die von einem GPS-Server gesendet werden, und wobei die tatsächliche Fahrtrichtung des Fahrzeugs an dem tatsächlichen Ortspunkt durch einen Sensor an dem Fahrzeug gemessen wird;
als Reaktion auf Empfangen eines Signals des Fahrzeugs, dass es im Begriff ist, in den Abbiegezustand einzutreten, Bestimmen (S103) einer ersten Abbiegeführungsspur des Fahrzeugs gemäß Informationen über einen gegenwärtigen tatsächlichen Ortspunkt des Fahrzeugs und den Informationen des Manövrierpunktes, wobei die erste Abbiegeführungsspur eine Abbiegerichtung des Fahrzeugs und einen Abbiegeradius für das Fahrzeug darstellt; und
Umwandeln (S104) der ersten Abbiegeführungsspur gemäß dem Kalibrierungsparameter der Kamera, um eine zweite Abbiegeführungsspur in einem Koordinatensystem der Kamera, die der ersten Abbiegeführungsspur entspricht, zu erhalten;
wobei das Bestimmen (S103) der ersten Abbiegeführungsspur des Fahrzeugs gemäß der Informationen des gegenwärtigen tatsächlichen Ortspunktes des Fahrzeugs und der Informationen des Manövrierpunktes umfasst:
Nutzen des gegenwärtigen tatsächlichen Ortspunkt P als ein Endpunkt, um einen Strahl entlang der tatsächlichen Fahrtrichtung des Fahrzeugs an dem Punkt P herzustellen, wobei der Strahl einen Linienabschnitt BC in einem Punkt D schneidet, wobei der Linienabschnitt BC durch den Manövrierpunkt B und einen Formpunkt C gebildet wird, der sich hinter dem Manövrierpunkt B auf der Navigationsroute befindet;
Herstellen einer Winkelhalbierenden für einen Winkel PDC und Herstellen einer vertikalen Linie für PD durch den Punkt P, wobei die vertikale Linie für PD die Winkelhalbierende für den Winkel PDC in einem Punkt O schneidet; und Herstellen eines Bogens mit dem Punkt O als Kreismittelpunkt und OP als Radius, wobei der Bogen den Linienabschnitt BC in einem Punkt E tangiert;
Erhalten einer Kurve zwischen dem Punkt C und dem Punkt E unter Verwendung einer Kurvenanpassungsmethode; und
Verbinden des Bogens und der Kurve, um die erste Abbiegeführungsspur zu bilden.

2. AR-Navigationsverfahren nach Anspruch 1, ferner umfassend:
Überlagern (S105) der zweiten Abbiegeführungsspur mit einem von der Kamera aufgenommenen realen Straßenszenenbild zur Anzeige.

3. AR-Navigationsverfahren nach Anspruch 1, wobei das Umwandeln (S104) der ersten Abbiegeführungsspur gemäß dem Kalibrierungsparameter der Kamera, um die zweite Abbiegeführungsspur in dem Koordinatensystem der Kamera, die der ersten Abbiegeführungsspur entspricht, zu erhalten, umfasst:
Abtasten (S206) der ersten Abbiegeführungsspur, um mehrere Abtastpunkte zu erhalten;
Umwandeln (S207) von Koordinatenwerten der mehreren Abtastpunkte in Koordinatenwerte in dem Koordinatensystem der Kamera gemäß dem Kalibrierungsparameter der Kamera; und
Zeichnen (S208) der zweiten Abbiegeführungsspur gemäß den Koordinatenwerten der mehreren Abtastpunkte in dem Koordinatensystem der Kamera.

4. AR-Navigationsverfahren nach einem der Ansprüche 1 bis 3, ferner umfassend:
Bestimmen (S203), dass das Fahrzeug im Begriff ist, in den Abbiegezustand an dem Manövrierpunkt einzutreten, gemäß der Koordinate des Manövrierpunktes und der Koordinate des tatsächlichen Ortspunktes des Fahrzeugs; und
Bestimmen (S204), dass das Fahrzeug in den Abbiegezustand eingetreten ist, gemäß der Informationen des gegenwärtigen tatsächlichen Ortspunkt des Fahrzeugs, Informationen eines gegenwärtigen Positionierungspunkt, der dem gegenwärtigen tatsächlichen Ortspunkt entspricht, Informationen mehrerer kontinuierlicher historischer Positionierungspunkte und Informationen tatsächlicher Ortspunkte, die den historischen Positionierungspunkten entsprechen, wobei der Positionierungspunkt ein Punkt ist, der dem tatsächlichen Ortspunkt des Fahrzeugs auf der Navigationsroute entspricht.

5. AR-Navigationsverfahren nach Anspruch 4, wobei das Bestimmen (S203), dass das Fahrzeug im Begriff ist, in den Abbiegezustand am Manövrierpunkt einzutreten, gemäß der Koordinate des Manövrierpunktes und der Koordinate des tatsächlichen Ortspunktes des Fahrzeugs umfasst:
Bestimmen einer tatsächlichen Entfernung zwischen dem Fahrzeug und dem Manövrierpunkt gemäß der Koordinate des Manövrierpunktes und der Koordinate des tatsächlichen Ortspunktes des Fahrzeugs; und
Bestimmen, dass das Fahrzeug im Begriff ist, in den Abbiegezustand einzutreten, unter einer Bedingung, dass die tatsächliche Entfernung zwischen dem Fahrzeug und dem Manövrierpunkt kleiner ist als ein voreingestellter Entfernungsschwellenwert.

6. AR-Navigationsverfahren nach Anspruch 4, wobei das Bestimmen (S204), dass das Fahrzeug in den Abbiegezustand eingetreten ist, gemäß der Informationen des gegenwärtigen tatsächlichen Ortspunktes des Fahrzeugs, der Informationen des gegenwärtigen Positionierungspunktes, der dem gegenwärtigen tatsächlichen Ortspunkt entspricht, der Informationen der mehreren kontinuierlichen historischen Positionierungspunkte und der Informationen der tatsächlichen Ortspunkte, die den historischen Positionierungspunkten entsprechen, umfasst:
Bestimmen von Entfernungen zwischen jedem der historischen Positionierungspunkte und dem tatsächlichen Ortspunkt, der jedem der historischen Positionierungspunkte entspricht, gemäß Koordinaten der mehreren kontinuierlichen historischen Positionierungspunkte und Koordinaten der tatsächlichen Ortspunkte, die den historischen Positionierungspunkten entsprechen;
Bestimmen eines eingeschlossenen Winkels zwischen einer tatsächlichen Fahrtrichtung des Fahrzeugs an dem gegenwärtigen tatsächlichen Ortspunkt und einer Navigationsrichtung des Fahrzeugs an dem gegenwärtigen Positionierungspunkt, der dem gegenwärtigen tatsächlichen Ortspunkt entspricht; und
Bestimmen, dass das Fahrzeug in den Abbiegezustand eingetreten ist, wenn die Entfernungen zwischen jedem der historischen Positionierungspunkte und dem tatsächlichen Ortspunkt, der jedem der historischen Positionierungspunkte entspricht, kontinuierlich zunehmen und der eingeschlossene Winkel größer als ein vorgegebener Winkel ist.

7. Augmented-Reality, AR, -Navigationsgerät (600), umfassend:
ein Kamerakalibrierungsmodul (601), das dazu eingerichtet ist, einen Kalibrierungsparameter einer in einem Fahrzeug installierten Kamera zu erfassen;
ein Navigationsmodul (602), das dazu eingerichtet ist, Informationen eines Manövrierpunktes, den das Fahrzeug auf der Navigationsroute passieren wird, und Informationen eines tatsächlichen Ortspunktes des Fahrzeugs zu erfassen (S 102), wobei das Fahrzeug an dem Manövrierpunkt abbiegt, wobei die Informationen des Manövrierpunktes eine Koordinate des Manövrierpunktes und eine Navigationsrichtung des Fahrzeugs an dem Manövrierpunkt umfassen, und wobei die Information des tatsächlichen Ortspunktes des Fahrzeugs eine Koordinate des tatsächlichen Ortspunktes und eine tatsächliche Fahrtrichtung des Fahrzeugs an dem tatsächlichen Ortspunkt umfassen, wobei die Koordinate des tatsächlichen Ortspunktes gemäß GPS-Daten erhalten wird, die von einem GPS-Server gesendet werden, und wobei die tatsächliche Fahrtrichtung des Fahrzeugs an dem tatsächlichen Ortspunkt durch einen Sensor an dem Fahrzeug gemessen wird;
ein Routenbestimmungsmodul (603), das dazu eingerichtet ist, als Reaktion auf den Empfang eines Signals des Fahrzeugs, dass es in einen Abbiegezustand eintritt, eine erste Abbiegeführungsspur des Fahrzeugs gemäß Informationen eines gegenwärtigen tatsächlichen Ortspunktes des Fahrzeugs und der Informationen des Manövrierpunktes zu bestimmen (S 103), wobei die erste Abbiegeführungsspur eine Abbiegerichtung des Fahrzeugs und einen Abbiegeradius für das Fahrzeug darstellt; und
ein AR-Anzeigemodul (604), das dazu eingerichtet ist, die erste Abbiegeführungsspur gemäß dem Kalibrierungsparameter der Kamera umzuwandeln (S104), um eine zweite Abbiegeführungsspur in einem Koordinatensystem der Kamera, die der ersten Abbiegeführungsspur entspricht, zu erhalten;
wobei das Routenbestimmungsmodul (603) speziell dazu eingerichtet ist:
den gegenwärtigen tatsächlichen Ortspunkt P als Endpunkt zu nehmen, um einen Strahl entlang der tatsächlichen Fahrtrichtung des Fahrzeugs an dem Punkt P herzustellen, wobei der Strahl einen Linienabschnitt BC in einem Punkt D schneidet, wobei der Linienabschnitt BC durch den Manövrierpunkt B und einen Formpunkt C gebildet wird, der sich hinter dem Manövrierpunkt B auf der Navigationsroute befindet;
eine Winkelhalbierende für einen Winkel PDC herzustellen und eine vertikale Linie für PD durch den Punkt P herzustellen, wobei die vertikale Linie für PD die Winkelhalbierende für den Winkel PDC in einem Punkt O schneidet; und einen Bogen mit dem Punkt O als Kreismittelpunkt und OP als Radius herzustellen, wobei der Bogen den Linienabschnitt BC in einem Punkt E tangiert;
eine Kurve zwischen dem Punkt C und dem Punkt E unter Verwendung einer Kurvenanpassungsmethode zu erhalten; und
den Bogen und die Kurve zu verbinden, um die erste Abbiegeführungsspur zu bilden.

8. AR-Navigationsgerät (600) nach Anspruch 7, wobei
das AR-Anzeigemodul (604) ferner dazu eingerichtet ist, die zweite Abbiegeführungsspur mit einem von der Kamera aufgenommenen realen Straßenszenenbild zur Anzeige zu überlagern.

9. AR-Navigationsgerät (600) nach Anspruch 7, wobei das AR-Anzeigemodul (604) speziell dazu eingerichtet ist:
die erste Abbiegeführungsspur abzutasten, um mehrere Abtastpunkte zu erhalten;
Koordinatenwerte der mehreren Abtastpunkte in Koordinatenwerte im Koordinatensystem der Kamera gemäß dem Kalibrierungsparameter der Kamera umzuwandeln; und
die zweite Abbiegeführungsspur gemäß den Koordinatenwerten der mehreren Abtastpunkte in dem Koordinatensystem der Kamera zu zeichnen.

10. AR-Navigationsgerät (600) nach einem der Ansprüche 7 bis 9, wobei das Routenbestimmungsmodul (603) ferner dazu eingerichtet ist:
gemäß der Koordinate des Manövrierpunktes und der Koordinate des tatsächlichen Ortspunktes des Fahrzeugs zu bestimmen, dass das Fahrzeug im Begriff ist, in den Abbiegezustand an dem Manövrierpunkt einzutreten; und
gemäß der Information des gegenwärtigen tatsächlichen Ortspunktes des Fahrzeugs, Informationen eines gegenwärtigen Positionierungspunktes, der dem gegenwärtigen tatsächlichen Ortspunkt entspricht, Informationen mehrerer kontinuierlicher historischer Positionierungspunkte und Informationen tatsächlicher Ortspunkte, die den historischen Positionierungspunkten entsprechen, zu bestimmen (S204), dass das Fahrzeug in den Abbiegezustand eingetreten ist, wobei der Positionierungspunkt ein Punkt ist, der dem tatsächlichen Ortspunkt des Fahrzeugs auf der Navigationsroute entspricht.

11. Nicht-transitorisches computerlesbares Speichermedium, das Computerbefehle speichert, wobei die Computerbefehle dazu eingerichtet sind, dass sie einen Computer dazu veranlassen, das Verfahren nach einem der Ansprüche 1 bis 6 durchzuführen.

12. Computerprogrammprodukt, das Anweisungen umfasst, die, wenn sie auf einem elektronischen Gerät ausgeführt werden, das elektronische Gerät dazu veranlassen, das Verfahren nach einem der Ansprüche 1-6 durchzuführen.

## Revendications

1. Procédé de navigation à réalité augmentée, AR, comprenant :
d'acquérir (S101) un paramètre d'étalonnage d'une caméra sur un véhicule ;
d'acquérir (S102) des informations d'un point de manoeuvre selon lesquelles le véhicule est sur le point de passer sur un itinéraire de navigation et des informations d'un point d'emplacement réel du véhicule, dans lequel le véhicule effectue un virage au point de manoeuvre, les informations du point de manoeuvre comprennent une coordonnée du point de manoeuvre et une direction de navigation du véhicule au point de manoeuvre, et les informations du point d'emplacement réel du véhicule comprennent une coordonnée du point d'emplacement réel et une direction de déplacement réel du véhicule au point d'emplacement réel, dans lequel la coordonnée du point d'emplacement réel est obtenue selon des données GPS envoyées par un serveur GPS, et la direction de déplacement réel du véhicule au point d'emplacement réel est mesurée par un capteur sur le véhicule ;
en réponse à la réception d'un signal de l'entrée du véhicule dans un état de virage, de déterminer (S103) une première piste de guidage de virage du véhicule selon des informations d'un point d'emplacement réel actuel du véhicule et les informations du point de manoeuvre, dans lequel la première piste de guidage de virage représente une direction de virage du véhicule et un rayon de virage du véhicule ; et
de convertir (S104) la première piste de guidage de virage selon le paramètre d'étalonnage de la caméra, pour obtenir une deuxième piste de guidage de virage dans un système de coordonnées de la caméra correspondant à la première piste de guidage de virage ;
dans lequel la détermination (S103) de la première piste de guidage de virage du véhicule selon les informations du point d'emplacement réel actuel du véhicule et les informations du point de manoeuvre comprend :
de prendre le point d'emplacement réel actuel P comme point d'extrémité pour réaliser un rayon le long de la direction de déplacement réel du véhicule au point P, dans lequel le rayon coupe un segment de ligne BC en un point D, le segment de ligne BC est formé par le point de manoeuvre B et un point de forme C situé derrière le point de manoeuvre B sur l'itinéraire de navigation ;
de réaliser une bissectrice d'un angle PDC, et de réaliser une ligne verticale à PD à travers le point P, dans lequel la ligne verticale à PD coupe la bissectrice de l'angle PDC en un point O ; et réaliser un arc ayant le point O comme centre de cercle et OP comme rayon, dans lequel l'arc est tangent au segment de ligne BC en un point E ;
d'obtenir une courbe entre le point C et le point E en utilisant un procédé d'ajustement de courbe ; et
de connecter l'arc et la courbe pour former la première piste de guidage de virage.

2. Procédé de navigation AR selon la revendication 1, comprenant en outre :
de superposer (S105) la deuxième piste de guidage de virage à une image de scène de route réelle capturée par la caméra pour affichage.

3. Procédé de navigation AR selon la revendication 1, dans lequel la conversion (S104) de la première piste de guidage de virage selon le paramètre d'étalonnage de la caméra, pour obtenir la deuxième piste de guidage de virage dans le système de coordonnées de la caméra correspondant à la première piste de guidage de virage comprend :
d'échantillonner (S206) la première piste de guidage de virage pour obtenir de multiples points d'échantillonnage ;
de convertir (S207) des valeurs de coordonnées des multiples points d'échantillonnage en valeurs de coordonnées dans le système de coordonnées de la caméra selon le paramètre d'étalonnage de la caméra ; et
de dessiner (S208) la deuxième piste de guidage de virage selon les valeurs de coordonnées des multiples points d'échantillonnage dans le système de coordonnées de la caméra.

4. Procédé de navigation AR selon l'une quelconque des revendications 1 à 3, comprenant en outre :
de déterminer (S203), selon la coordonnée du point de manoeuvre et la coordonnée du point d'emplacement réel du véhicule, que le véhicule est sur le point d'entrer dans l'état de virage au point de manoeuvre ; et
de déterminer (S204), selon les informations du point d'emplacement réel actuel du véhicule, des informations d'un point de positionnement actuel correspondant au point d'emplacement réel actuel, des informations de multiples points de positionnement historiques continus et des informations de points d'emplacement réels correspondant aux points de positionnement historiques, que le véhicule est entré dans l'état de virage, dans lequel le point de positionnement est un point correspondant au point d'emplacement réel du véhicule sur l'itinéraire de navigation.

5. Procédé de navigation AR selon la revendication 4, dans lequel la détermination (S203), selon la coordonnée du point de manoeuvre et la coordonnée du point d'emplacement réel du véhicule, du fait que le véhicule est sur le point d'entrer dans l'état de virage au point de manoeuvre comprend :
de déterminer une distance réelle entre le véhicule et le point de manoeuvre selon la coordonnée du point de manoeuvre et la coordonnée du point d'emplacement réel du véhicule ; et
de déterminer que le véhicule est sur le point d'entrer dans l'état de virage, à une condition où la distance réelle entre le véhicule et le point de manoeuvre est inférieure à un seuil de distance prédéfini.

6. Procédé de navigation AR selon la revendication 4, dans lequel la détermination (S204) selon les informations du point d'emplacement réel actuel du véhicule, d'informations du point de positionnement actuel correspondant au point d'emplacement réel actuel, d'informations des multiples points de positionnement historiques continus et d'informations des points d'emplacement réels correspondant aux points de positionnement historiques, que le véhicule est entré dans l'état de virage, comprend :
de déterminer, selon des coordonnées des multiples points de positionnement historiques continus et des coordonnées des points d'emplacement réels correspondant aux points de positionnement historiques, des distances entre chacun des points de positionnement historiques et le point d'emplacement réel correspondant à chacun des points de positionnement historiques ;
de déterminer un angle inclus entre une direction de déplacement réel du véhicule au point d'emplacement réel actuel et une direction de navigation du véhicule au point de positionnement actuel correspondant au point d'emplacement réel actuel ; et
de déterminer que le véhicule est entré dans l'état de virage à une condition où les distances entre chacun des points de positionnement historiques et le point d'emplacement réel correspondant à chacun des points de positionnement historiques augmentent de manière continue, et où l'angle inclus est supérieur à un angle prédéfini.

7. Appareil de navigation à réalité augmentée, AR, (600), comprenant :
un module d'étalonnage de caméra (601) configuré pour acquérir un paramètre d'étalonnage d'une caméra installée sur un véhicule ;
un module de navigation (602) configuré pour acquérir (S102) des informations d'un point de manoeuvre selon lesquelles le véhicule est sur le point de passer sur l'itinéraire de navigation et des informations d'un point d'emplacement réel du véhicule, dans lequel le véhicule effectue un virage au point de manoeuvre, les informations du point de manoeuvre comprennent une coordonnée du point de manoeuvre et une direction de navigation du véhicule au point de manoeuvre, et les informations du point d'emplacement réel du véhicule comprennent une coordonnée du point d'emplacement réel et une direction de déplacement réel du véhicule au point d'emplacement réel, dans lequel la coordonnée du point d'emplacement réel est obtenue selon des données GPS envoyées par un serveur GPS, et la direction de déplacement réel du véhicule au point d'emplacement réel est mesurée par un capteur sur le véhicule ;
un module de détermination d'itinéraire (603) configuré pour déterminer (S103), en réponse à la réception d'un signal de l'entrée du véhicule dans un état de virage, une première piste de guidage de virage du véhicule selon des informations d'un point d'emplacement réel actuel du véhicule et les informations du point de manoeuvre, dans lequel la première piste de guidage de virage représente une direction de virage du véhicule et un rayon de virage du véhicule ; et
un module d'affichage AR (604) configuré pour convertir (S104) la première piste de guidage de virage selon le paramètre d'étalonnage de la caméra, pour obtenir une deuxième piste de guidage de virage dans un système de coordonnées de la caméra correspondant à la première piste de guidage de virage ;
dans lequel le module de détermination d'itinéraire (603) est spécifiquement configuré pour :
prendre le point d'emplacement réel actuel P comme point d'extrémité pour réaliser un rayon le long de la direction de déplacement réel du véhicule au point P, dans lequel le rayon coupe un segment de ligne BC en un point D, le segment de ligne BC est formé par le point de manoeuvre B et un point de forme C situé derrière le point de manoeuvre B sur l'itinéraire de navigation ;
réaliser une bissectrice d'un angle PDC, et réaliser une ligne verticale à PD à travers le point P, dans lequel la ligne verticale à PD coupe la bissectrice de l'angle PDC en un point O ; et réaliser un arc ayant le point O comme centre de cercle et OP comme rayon, dans lequel l'arc est tangent au segment de ligne BC en un point E ;
obtenir une courbe entre le point C et le point E en utilisant un procédé d'ajustement de courbe ; et
connecter l'arc et la courbe pour former la première piste de guidage de virage.

8. Appareil de navigation AR (600) selon la revendication 7, dans lequel,
le module d'affichage AR (604) est en outre configuré pour superposer la deuxième piste de guidage de virage à une image de scène de route réelle capturée par la caméra pour affichage.

9. Appareil de navigation AR (600) selon la revendication 7, dans lequel le module d'affichage AR (604) est spécifiquement configuré pour :
échantillonner la première piste de guidage de virage pour obtenir de multiples points d'échantillonnage ;
convertir des valeurs de coordonnées de multiples points d'échantillonnage en valeurs de coordonnées dans le système de coordonnées de la caméra selon le paramètre d'étalonnage de la caméra ; et
dessiner la deuxième piste de guidage de virage selon les valeurs de coordonnées des multiples points d'échantillonnage dans le système de coordonnées de la caméra.

10. Appareil de navigation AR (600) selon l'une quelconque des revendications 7 à 9, dans lequel le module de détermination d'itinéraire (603) est en outre configuré pour :
déterminer (S203), selon la coordonnée du point de manoeuvre et la coordonnée du point d'emplacement réel du véhicule, que le véhicule est sur le point d'entrer dans l'état de virage au point de manoeuvre ; et
déterminer (S204), selon les informations du point d'emplacement réel actuel du véhicule, des informations d'un point de positionnement actuel correspondant au point d'emplacement réel actuel, des informations de multiples points de positionnement historiques continus et des informations de points d'emplacement réels correspondant aux points de positionnement historiques, que le véhicule est entré dans l'état de virage, dans lequel le point de positionnement est un point correspondant au point d'emplacement réel du véhicule sur l'itinéraire de navigation.

11. Support de stockage non transitoire lisible par ordinateur stockant des instructions informatiques, dans lequel les instructions informatiques sont configurées pour amener un ordinateur à réaliser le procédé selon l'une quelconque des revendications 1 à 6.

12. Produit de programme informatique, comprenant des instructions qui, lorsqu'elles sont exécutées sur un dispositif électronique, amènent le dispositif électronique à réaliser le procédé selon l'une quelconque des revendications 1 à 6.
